# EUROPEAN PATENT APPLICATION

(11) **EP 4 277 224 A1**
(43) Date of publication of application: **15.11.2023**
(21) Application number: 22173304.1
(22) Date of filing: 13.05.2022
(51) Int. Cl.: H04L 43/091, H04L 41/50, H04L 41/40, H04L 43/0817, H04L 41/122

(54) **APPLICATION STATUS DETECTION IN THE CONTEXT OF NETWORK ABSTRACTION**

(71) Applicant: Nokia Solutions and Networks Oy, 02610 Espoo (FI)
(72) Inventor: RANDRIAMASY, Sabine, 91620 Nozay (FR); HEBBAR, Abdelkrim, 91620 Nozay (FR)
(74) Representative: TBK

(57) **Abstract**

Method comprising:
determining elements of a representation of a northbound interface of an orchestrator based on translator information and a deployment topology intent;
checking whether a first triggering condition is fulfilled;
requesting, via the northbound interface of the orchestrator, status information of the elements if the first triggering condition is fulfilled;
translating the status information received in response to the requesting from the orchestrator into a deployment topology status based on the translator information;
supervising whether a second triggering condition is fulfilled;
comparing the deployment topology intent with the deployment topology status if the second triggering condition is fulfilled;
informing on a difference between the deployment topology intent and the deployment topology status based on a result of the comparing.

## Description

### Field of the invention

The present disclosure relates to application status detection in the context of network abstraction.

### Abbreviations

- 3GPP: 3^{rd} Generation Partnership Project
- 5G / 6G: 5^{th} / 6^{th} Generation
- ALTO: Application Layer Traffic Optimization
- ANE: Abstracted Network Element
- API: Application Programming Interface
- APP: Application
- ASI: Application Slice Instance
- BW: Bandwidth
- CNI: Cloud & Network Infrastructure
- CNI-CP: Cloud & Network Infrastructure - Control Plane
- CPDB: Consumption and Patterns DB
- CPU: Central Processing Unit
- C, R, S, A: CPU, RAM, STORAGE, AVAILABILITY
- DB: Data Base
- DC: Data Center
- DCDTS: DC Deployment Topology Status
- DCDTT: DC Deployment Topology Target
- DM: Domain Mapping
- ED: Entity Domain
- EDI: Entity Domain Identifier
- EDT: Entity Domain Type
- eMBB: enhanced Massive BroadBand
- EPM: Entity Property Map
- FISH: Functional Intent Self-Healing
- HSC: Health Score
- HTTP: Hypertext Transfer Protocol
- IBAS: Intent Based Application Slicing
- IBN: Intent Based Networking
- IE: Intent Engine
- IETF: Internet Engineering Task Force
- IHDB: Intent Health DB
- loT: Internet of Things
- IP: Internet Protocol
- IRTF: Internet Research Task Force
- LCI: Lifecycle Instructions
- MDT: MSV Deployment Topology
- MDTI: MSV Deployment Topology Intent
- MDTS: MSV Deployment Topology State
- MHEV: MSV Health Evals
- MHM: Microservice Self-Healing
- MMO: MSV Monitoring
- MMOI: MSV Monitoring Intent
- MSDI: MSV State Documentation Intent
- MSV, µSV: Micro SerVice
- Naddr: Network Address
- NMRG: Network Management Research Group
- NVF: Virtualized Network Function
- ORCH: Orchestrator
- OTT: Over-The-Top
- PID: Provider-defined Identifier
- RAM: Random Access Memory
- RFC: Request for Comments
- SDN: Software Defined Network
- SDNC: Software Defined Network Controller
- SDO: Standardisation Organisation
- VLAN: Virtual Local Area Network
- VNF: Virtualized Network Function
- VM: Virtual Machine
- WG: Working Group

### Background

With the deployment of 5G networks and future emergence of 6G networks, the market for vertical applications is booming. These services are widely supported by virtualization of network and application traffic handling functions, for which cloud native virtualization solutions exist and are widely used. Vertical application service providers rent from legacy operators networking services that are coupled with virtualization. An upcoming challenge is that vertical application service providers will request services to be deployed at an increasing volume, often on the fly and with an ephemeral duration while demanding robust support to mission critical applications.

An application typically has a dedicated share of infrastructure resources for connectivity and cloud computing, called a network slice. To support the growth of application slices requests, network connectivity and application services deployments mostly involve SDN control and orchestration of network and cloud resources. Cloud resources involve virtualized network functions (VNF), also called microservices (denoted as MSV or µSV). Orchestration performs the deployment and management of the virtualized functions. The latter, once deployed, are typically interconnected and chained and are sometimes distributed among several Data Centers (DCs). A MSV chain is also referred to as an application slice.

Cloud native orchestration solutions get now widely used by major network, telco and cloud providers and equipment vendors. The most popular one is Kubernetes. Docker Swarm is still used by many deployments.

Intent-based networking (IBN) is being developed to moderate complexity of deployment and management of vertical applications and network services. IBN bridges the gap between clients and infrastructure by offering a user-friendly interface to the network infrastructure for fast and reliable Client request processing. An Intent is defined as an infrastructure-agnostic expression of an infrastructure service request and qualified as "declarative", because it expresses WHAT is requested and not HOW the request should be fulfilled. IBN hides infrastructure complexity and confidentiality while all the needed infrastructure information is exposed to Clients.

An intent may range from equipment configuration requests up to vertical application deployment expressed in almost natural language. Typically, DC intents focus on QoS during application run-time phase (such as load sharing), not at service deployment. [irtf-nmrg-intent-classif], Section 4.4. "Intent Types that need to be supported" includes:
- Cloud management intent: for DC configuration, VMs, DB servers, APP servers, for communication between VMs.
- Cloud resource management intent: for cloud resource life-cycle management (policy driven self-configuration and auto-scaling and recovery/optimization).

Current solutions to monitor and manage network slicing lack simple and standardized representation of the network topology, as stressed many times in [naw], in particular to represent the application deployment topology in a simple and handy way.

To address this, the IETF ALTO WG, see [alto-wg], is standardizing a client-server protocol, where an operator-centric abstraction of a network topology can be exposed to applications. The abstraction conveys all network information helping applications to decide where or when to connect. The abstractions hides both the complexity and the confidentiality of network information. A protocol extension [alto-uprop] is being standardized, to expose properties of given entities of a network infrastructure, in particular entities that can be data center abstractions or parts thereof.

### REFERENCES

[k8s-mld] Kubernetes online documentation, "Monitoring, Logging, and Debugging", https://kubernetes.io/docs/tasks/debug-application-cluster/_print/
[k8s-pod-lc] Kubernetes online documentation, "Pod Lifecycle", https://kubernetes.io/fr/docs/concepts/workloads/pods/pod-lifecycle/
[irtf-nmrg-intent-classif] "Intent Classification", draft-irtf-nmrg-ibn-intent-classification-05, November 10, 2021 https://www.ietf.org/archive/id/draft-irtf-nmrg-ibn-intent-classification-05.txt
[naw] https://www.fiercedigitaltechevents.com/Network-Automation-Week, 27-29 September 2021
[alto-wg] IETF Application Layer Traffic Optimization (ALTO) Working Group https://tools.ietf.org/wg/alto/
[ibas] "Intent-based slicing framework for OTT applications", S. Randriamasy, I. Latif, F. Aklamanu, EP 3 470 983, filed October 10th 2017.
IETF RFC 7285, "Application-Layer Traffic Optimization (ALTO) Protocol", https://datatracker.ietf.org/doc/html/rfc7285
IETF RFC 8895, "Application-Layer Traffic Optimization (ALTO) Incremental Updates Using Server-Sent Events (SSE)", https://datatracker.ietf.org/doc/html/rfc8895
[pvector] IETF Standards Track WG document, "ALTO Extension: Path Vector", K. Gao, Y. Lee, S. Randriamasy, Y.R. Yang, J. Zhang, under IESG review, https://tools.ietf.org/wg/alto/draft-ietf-alto-path-vector/
[alto-uprop] IETF Standards Track WG document, "ALTO Extension: Entity Property Maps", W. Roome, S. Randriamasy, Y. Yang, J. Zhang, K. Gao, RFC-to-be 9240, in RFC-EDITOR state, https://tools.ietf.org/wg/alto/draft-ietf-alto-unified-props-new/

### Summary

It is an object of the present invention to improve the prior art.

According to a first aspect of the invention, there is provided an apparatus comprising:
one or more processors, and
memory storing instructions that, when executed by the one or more processors, cause the apparatus to perform:
   determining elements of a representation of a northbound interface of an orchestrator based on translator information and a deployment topology intent;
   checking whether a first triggering condition is fulfilled;
   requesting, via the northbound interface of the orchestrator, status information of the elements if the first triggering condition is fulfilled;
   translating the status information received in response to the requesting from the orchestrator into a deployment topology status based on the translator information;
   supervising whether a second triggering condition is fulfilled;
   comparing the deployment topology intent with the deployment topology status if the second triggering condition is fulfilled;
   informing on a difference between the deployment topology intent and the deployment topology status based on a result of the comparing; wherein
   the first triggering condition comprises at least one of:
      the deployment topology intent receives a lifecycle request, and
      a first regular timing has elapsed;
   the second triggering condition comprises at least one of:
      the deployment topology intent receives the lifecycle request, and
      a second regular timing has elapsed;
   the deployment topology intent comprises at least one first element and values of respective one or more properties of the at least one first element;
   the deployment topology status comprises presence indication of at least one second element and values of the respective one or more properties of the at least one second element;
   each of the at least one first element and the at least one second element is a respective network map or a respective provider-defined identifier or a respective endpoint or a respective IPv4 entity or a respective IPv6 entity or a respective abstracted network element;
   according to the translator information, the one or more first and second elements are implemented by the elements of the representation of the northbound interface of the orchestrator;
   the representation of the northbound interface of the orchestrator does not comprise any of the first and second elements.

According to a second aspect of the invention, there is provided a method comprising:
determining elements of a representation of a northbound interface of an orchestrator based on translator information and a deployment topology intent;
checking whether a first triggering condition is fulfilled;
requesting, via the northbound interface of the orchestrator, status information of the elements if the first triggering condition is fulfilled;
translating the status information received in response to the requesting from the orchestrator into a deployment topology status based on the translator information;
supervising whether a second triggering condition is fulfilled;
comparing the deployment topology intent with the deployment topology status if the second triggering condition is fulfilled;
informing on a difference between the deployment topology intent and the deployment topology status based on a result of the comparing; wherein
the first triggering condition comprises at least one of:
   the deployment topology intent receives a lifecycle request, and
   a first regular timing has elapsed;
the second triggering condition comprises at least one of:
   the deployment topology intent receives the lifecycle request, and
   a second regular timing has elapsed;
the deployment topology intent comprises at least one first element and values of respective one or more properties of the at least one first element;
the deployment topology status comprises presence indication of at least one second element and values of the respective one or more properties of the at least one second element;
each of the at least one first element and the at least one second element is a respective network map or a respective provider-defined identifier or a respective endpoint or a respective IPv4 entity or a respective IPv6 entity or a respective abstracted network element;
according to the translator information, the one or more first and second elements are implemented by the elements of the representation of the northbound interface of the orchestrator;
the representation of the northbound interface of the orchestrator does not comprise any of the first and second elements.

The method may be a method of application status detection.

According to a third aspect of the invention, there is provided a computer program product comprising a set of instructions which, when executed on an apparatus, is configured to cause the apparatus to carry out the method according to the second aspect. The computer program product may be embodied as a computer-readable medium or directly loadable into a computer.

According to some embodiments of the invention, at least one of the following advantages may be achieved:
- the status of an application made of microservices is easily available;
- reduced efforts for retrieving and parsing.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 illustrates a mapping between cloud infrastructure deployment topology and ALTO topology;
Fig. 2 illustrates an actual deployment of MSVs mapped with ALTO target deployment topology according to some example embodiments of the invention;
Fig. 3 illustrates mapping of MSV properties in cloud deployment with ALTO topology and property maps according to some example embodiments of the invention;
Fig. 4 illustrates some properties useful to bridge between ipv4 or ipv6 domain and ALTO domain according to some example embodiments of the invention;
Figs. 5a and 5b illustrate MDTSs with a mapping between cloud compute capabilities and ALTO entity properties according to some example embodiments of the invention;
Fig. 6 depicts an example Target MSV deployment topology according to some example embodiments of the invention;
Fig. 7 shows a message sequence chart according to some example embodiments of the invention;
Fig. 8 shows an apparatus according to an example embodiment of the invention;
Fig. 9 shows a method according to an example embodiment of the invention;
Fig. 10 shows an apparatus according to an example embodiment of the invention;
Figs. 11a to 11c illustrate a method according to some example embodiments of the invention; and
Fig. 12 shows a list of some of the entities defined in the respective domains, according to some example embodiments of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

The robustness and resilience of the resulting service chain (MSV chain) is a crucial issue to efficient network automation. If one of the MSVs in a MSV chain fails, the whole application slice using this MSV is typically impacted. For example, when this failure breaks the chain, it breaks the application as well. Given the stringent reliability expectations of the vertical application service provider, neither the slice provider nor the infrastructure provider can afford this. Current service orchestration systems do not spontaneously report MSV failures to their calling application and cannot properly repair the MSV chain. Neither can they deploy and repair a MSV chain deployed over several data centres.

None of the existing orchestration solutions implement functionalities that spontaneously report failures on MSV, neither at deployment time nor at run time. The entity requesting deployment of a MSV needs to explicitly query the orchestrator for the state of the MSV to discover this state. Additionally, the status information received from an orchestrator is voluminous and requires several queries. With Kubernetes, an entity willing to deploy a MSV and be informed on the fly on its status needs to schedule several requests, and then parse and filter 50+ lines just to realize that a MSV is pending and know that this is due to a lack of resources. This is illustrated by the examples in [k8s-mld] and [k8s-pod-lc].

Companies using these orchestrators define their own healing solutions but are facing issues such as management complexity and scalability of the data to analyse, especially as the involved data center topology size and cloud-based services demand will increase. The IBAS system described hereinabove lacks functionalities to monitor functional chains, prevent their disruption or repair them when they occur, too.

Some example embodiments of the invention provide a solution to the problem how an application slicing system using virtual functions can reliably and quickly monitor the functional chain and ensure immediate and seamless healing if needed. In application slicing, MSV orchestration is coupled with SDN based connectivity management and some example embodiments are particularly related to MSV orchestration.

Some example embodiments of the invention provide a method and/or a component to automatically detect failures that may occur on a microservice (also called "function") involved in an application slice instance (ASI), during lifecycle operations done by an orchestrator on this microservice, where lifecycle operations include at least one of deployment, running, update of capabilities, and removal.

The term microservice ("function") covers an entity that is handled by an orchestrator (typically a Docker container handled by Docker Swarm orchestrator or a POD handled by Kubernetes). The term "slice" in this description covers a set of microservices ("functions") that are selected and connected so as to contribute to the execution of an application.

Some example embodiments focus on the microservices that are involved in an application slice and is named FISH in the present document, standing for Functional Intent Self Healing.

FISH automatically detects failures on microservices thanks to an abstraction of the slice deployment topology. The abstraction may be standardized. Then, FISH may send the state of the impacted microservices to appropriate modules of the framework that manage the application slicing. In addition, FISH may use the collected state information to improve future decision-making and problem fixing.

For better ergonomics, scalability and interoperability, FISH may use existing and upcoming standards for abstracted network topology formats to represent deployment of the microservices of an application slice. FISH may also involve extensions of these standards that are not yet disclosed. Some examples are listed further below.

Some example embodiments of the invention provide at least one of the following features:
- Ancillary MSV Health Monitoring (MHM), associated to application slice intents. An application slice is a network slice dedicated to an application. An application slice intent specifies (i) application attributes that are agnostic to the underlying technology and topology details, e.g. app name, start date & duration, number of devices, QoE constraints (ii) what action to do on this slice, e.g. deploy, set-up and wait, cancel, remove...
   ∘ MHM intent is triggered upon reception of Lifecycle instructions (LCI) on an application slice intent, in the first place to monitor the state of the MSVs associated to the functions.
- The MHM Intent Engine is composite and includes at least one of the following functions:
   ∘ A MSV Deployment Topology Intent (MDTI), depicting a "target MDT": the set of MSVs to deploy, the servers that should host these MSV, the Data Centers hosting these Servers.
      ▪ For each MSV in the target MDT, a property indicating the desired amount of allocated compute resources
      ▪ Optionally, for each server, one or more statistical properties indicating the desired level of availability and robustness,
   ∘ An MSV deployment topology state (MDTS) depicting the actual state of the MDTI by adding,
      ▪ for each MSV, a property indicating whether the MSV is properly installed and/or running
      ▪ optionally, for each MSV, a statistical property indicating whether the MSV is stable,
      ▪ optionally, for each MSV a property indicating the amount of allocated compute resources
      ▪ optionally, for each server, one or more statistical properties reflecting the level of availability and robustness,
   ∘ A function that compares the MDTS against the MDTI, updates the properties and "health evaluation" (health status) of each of the target MSV and hosts of the MDTI, for future deployment decisions, and sends this evaluation to the relevant databases in a system that manages the LCI.
   ∘ An MSV Monitoring intent (MMOI) that represents an abstracted request sent to the orchestrator to check the state of an MSV and is typically agnostic to the implementation of the orchestrator
   ∘ A MSV State Documentation intent (MSDI) that informs other functions in the IBAS framework of the state of the MSV associated with the context of the lifecycle action (date, location, etc..)

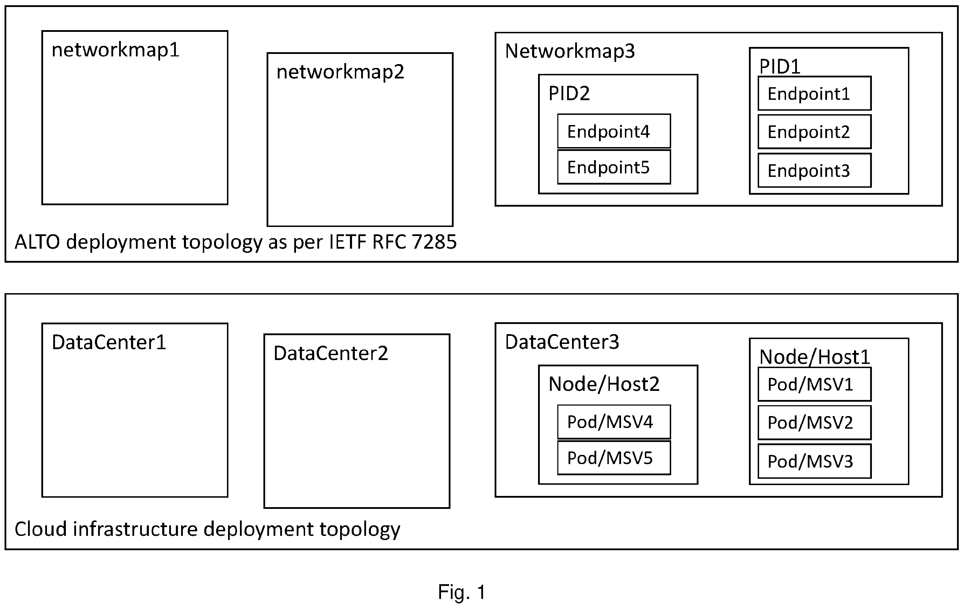

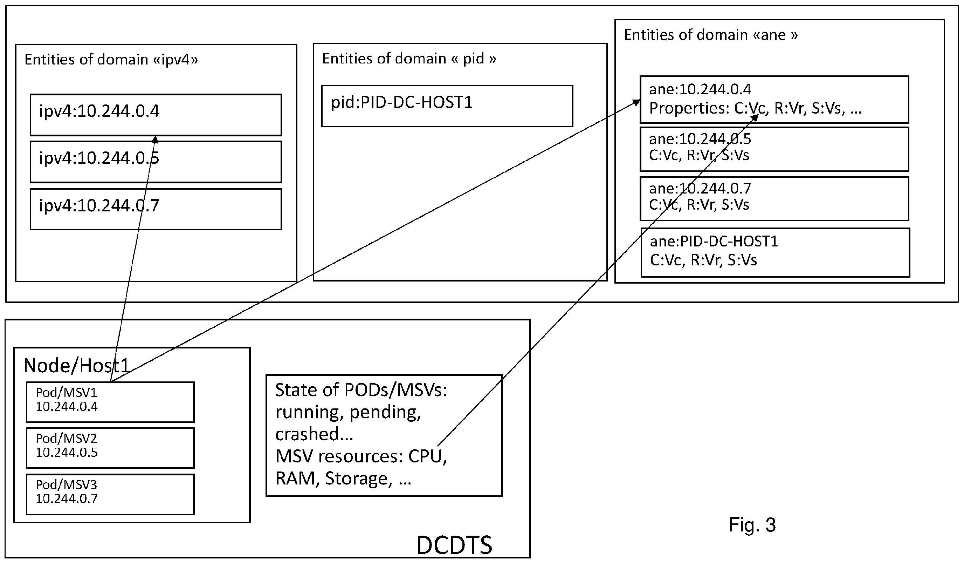

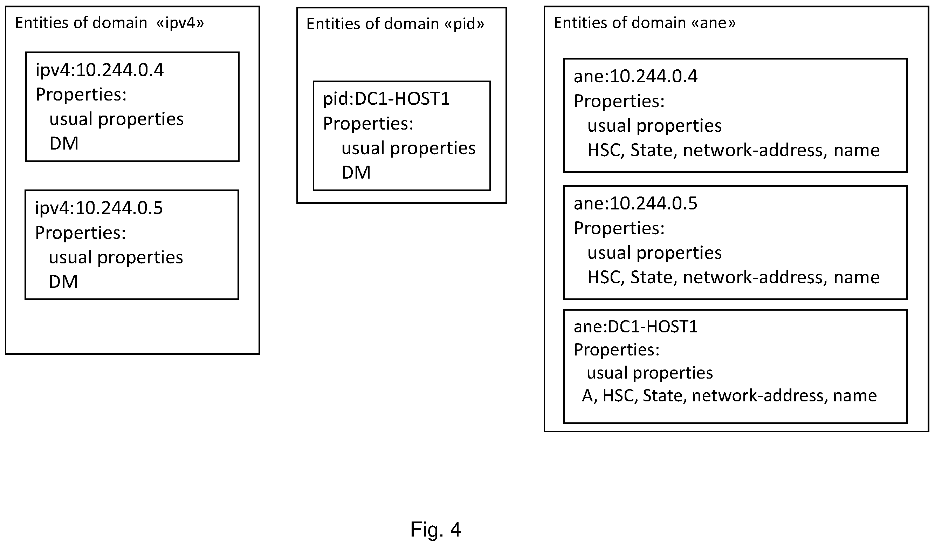

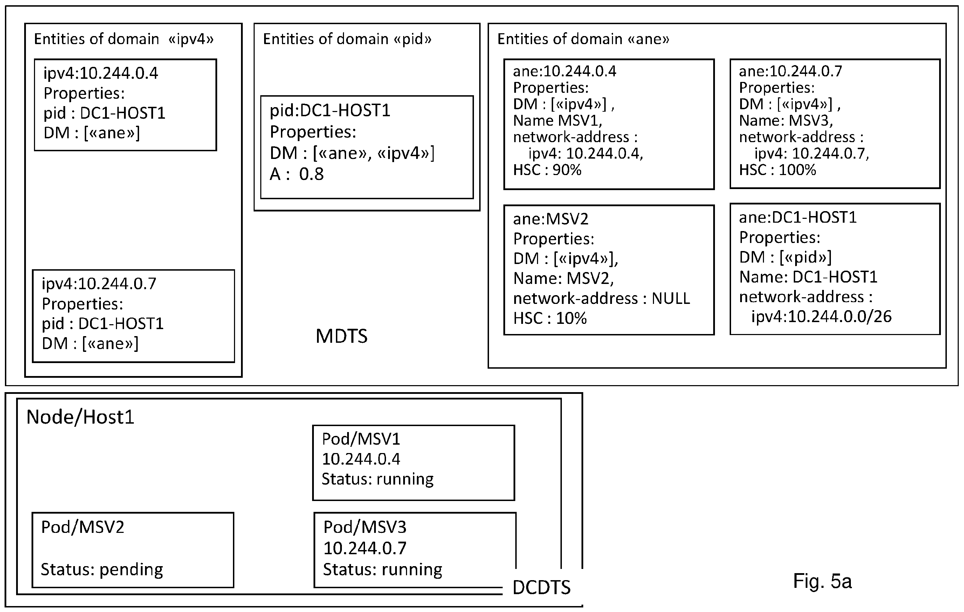

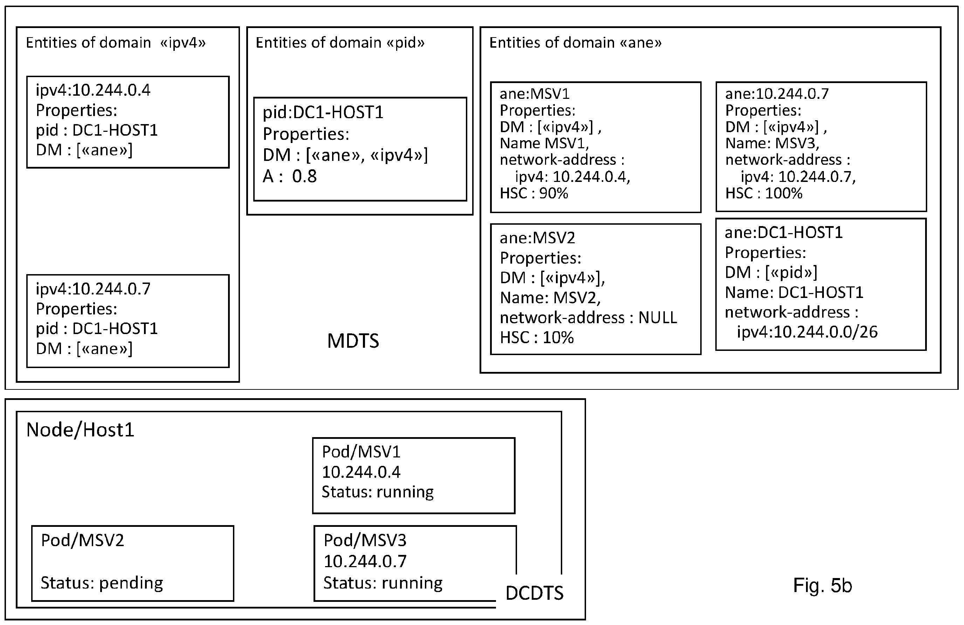

According to some example embodiments of the invention, the MDTI and the MDTS may be represented in the format of an IETF ALTO Network Map as per RFC 7285 and an IETF ALTO Entity Property Map, as per an upcoming IETF RFC, see [alto-uprop]. Namely:
∘ An ALTO network map conveys the network addresses of the Servers and MSVs, as shown in Fig. 1 and allows to straightforwardly know whether a MSV is deployed or not. An extended Property Map allows to retrieve "advanced deployment status" (running, stalled, crashed, pending, ..) of an MSV as illustrated in Fig. 5b.
∘ An extended ALTO entity property map conveys the compute resources of a server/host and an MSV together with properties reflecting the "health" or "availability" or "robustness" of a deployed MSV, as proposed in Figs. 5a and 5b. This may be achieved by introducing additional ALTO features extending ALTO property maps, as motivated in Figs. 3 and 4 and detailed further below, in order to establish easily a correspondence between:
   ▪ ALTO Endpoints defined in ALTO network maps and identified by their network address
   ▪ ALTO Entities of type "ANE", that are identified by a string that may denote their network address or anything else. "ANE" stands for abstracted network element and is an ALTO entity domain type that is specified in upcoming RFC [pvector]. In order to associate the ALTO endpoints reliably to the ALTO entities of type "ANE", an Entity property is defined that conveys their network address.

Endpoints in an ALTO network map can also be represented as entities of a domain defined by a communication address type such as the "ipv4" and "ipv6" entity domains, specified in [alto-uprop]. A correspondence between entities of different domains, that point to a same object while having a different identifier can be established by defining a property that conveys the entity domains where these entities are also present.

Some example embodiments of the invention use a Standardized abstracted deployment topology
- Exposed via interfaces IETF RFC 7285, RFC 8895, and an upcoming RFC [alto-uprop]
- They may introduce new features to the existing standards, detailed further, that extend the upcoming RFC [alto-uprop].

Some example embodiments comprise an ALTO-ORCH translation module that:
∘ Transforms ALTO Client requests to HTTP requests to be sent to an orchestrator,
∘ Fetches the responses sent by the orchestrator from which it extracts the relevant information
∘ Adds the obtained information to the slice deployment topology in the ALTO Server
∘ Transforms the orchestrator response in a response to the ALTO Client.

The information may be transferred asynchronously to minimize the volume of exchanged data. For that purpose, some example embodiments may leverage ALTO RFC 8895, where the ALTO Server pushes information updates to the ALTO Client, whenever there is a change in the deployment topology, in particular a change in the properties of the MSV or in the Server hosting the MSVs. This information push occurs when the ALTO Client opens the relevant HTTP stream. However, the asynchronous information transfer may be different from that defined by ALTO RFC 8895 in some example embodiments of the invention.

Fig. 1 illustrates one embodiment where the elements of a deployment topology of MSVs in a data center (DC) can be directly mapped with an ALTO network map specified in RFC7285. An ALTO network map is a provider-centric partition of the Internet in so-called PIDs, where the term PID stands for Provider-defined IDentifier. Defined in RFC7285, a PID specifies "a network-agnostic aggregation of network endpoints that may be treated similarly, based on network topology, type, or other properties." In the DC topology, the term Pod belongs to the Kubernetes terminology and is used to illustrate that a Pod can be one embodiment of a microservice. The ALTO network map itself maps to a DC, a PID maps to a DC host or node, and an Endpoint maps to a MSV. ALTO endpoints are defined by their IPv4 or IPv6 address and can be directly mapped to MSV identified by their IP address.

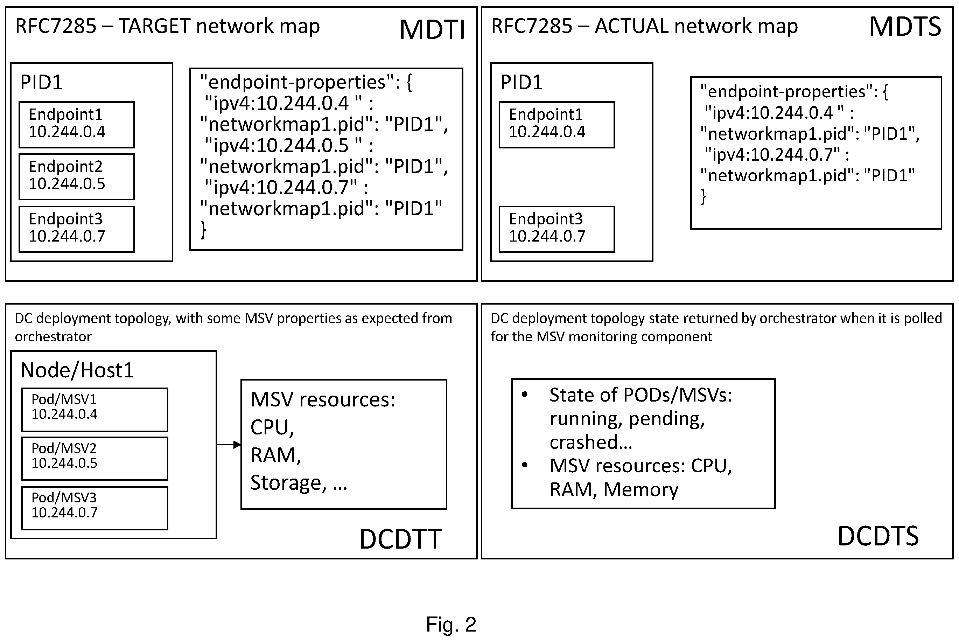

Fig. 2 illustrates an actual deployment of MSVs mapped with ALTO target and actual deployment topology. In particular, Fig. 2 illustrates how inspecting a RFC7285 network map allows to directly establish whether a MSV has been deployed or not, in implementations where the orchestration system arbitrarily allocates an IP address to a MSV prior to deployment.

Fig. 2 provides an example, corresponding to that of Fig. 1, with three MSVs that an orchestrator is requested to deploy in Node/Host1 (of DC3). These example MSVs each have an assigned IP address with example values: 10.244.0.4, 10.244.0.5, and 10.244.0.7, respectively. The FISH component generates a so-called Micro Service Deployment Topology Intent (MDTI, top left in Fig. 2).

MDTI comprises the target deployment topology, that has the format of an ALTO Network Map and specifies where the MSVs should be deployed. MDTI also comprises the set of endpoint properties as per RFC7285, that defines one endpoint property named "pid", whose value is the PID where the MSV is deployed. In the example of Fig. 2, the value in the MDTI is equal to "PID1" for all the endpoints, as all the MSVs are requested to be deployed in PID1 (corresponding to Node/host1).

Fig. 2 provides on the top right side, an example Micro Service Deployment Topology State (MDTS). MDTS represent the actual deployment topology, that has the format of an ALTO Network Map and specifies whether and where the required MSVs have been deployed. The MDTS is obtained via the MSV Self-Healing (MHM) component.

Comparing MDTI and MDTS allows to evaluate the actual deployment of the MSVs. For example, as shown in Fig. 2, in MDTS, Endpoint2 is not present in PID1 and no endpoint property is returned for Endpoint2. This allows to directly infer that Pod/MSV2 has not been properly deployed. Further polling of the orchestrator may return reasons such as "pending" or "crashed". On the other hand, Endpoint1 and Endpoint3 are present in PID1 in MDTS and that endpoint property value "PID1" is returned for both, allows to infer that Pod/MSV1 and Pod/MSV3 are deployed and running.

In some example embodiments, when the MSVs are deployed, FISH may set a timer for regular checks on the MSVs, independently of lifecycle instructions, to see if they are still present in the host. In this case, in a first step, comparing the network maps is sufficient to detect if a MSV has crashed. Network map comparison can also be used to check if a MSV has been properly removed.

At the bottom left of Fig. 2, DCDTT represents the desired DC deployment topology target, with some MSV properties, as requested from orchestrator. DCDTS at the bottom right of Fig. 2 represents a set of information on the deployed MSVs that can be returned by an orchestrator.

In RFC7285, ALTO endpoints are defined as IPv4 or IPv6 addresses and RFC7285 defines one endpoint property type named "pid" and whose value is the identifier, in a given network map, of the PID the endpoint belongs to. The DCDTT of Fig. 2 shows an example of MSV properties that are important to monitor and are the MSV resources CPU, RAM, Storage, (C, R, S for short). However, properties reflecting MSV resources or other cloud/computing resources are not defined for IPv4 or IPv6 endpoints and as such cannot be conveyed using RFC 7285.

The example in Fig. 2 assumes that the MSVs to be deployed are given an arbitrary IP address. This arbitrary address may be replaced by another IP address assigned once the MSV is properly deployed, and mapped with the actual deployment.

Fig. 3 illustrates how a same DC element can be mapped separately to an "ipv4" or a "pid" entity and to an "ane" entity. Fig. 3 shows ALTO property maps for entities of domains « ipv4 », « pid » and « ane » as per [alto-uprop]. In Fig. 3 and the next figures, some MSV resources and properties are symbolized with upper case letters such as: C in "C:Vc" standing for CPU, R in "R:Vr" standing for RAM, S in "S:Vs" standing for Storage, M standing for Memory and A standing for Availability where present. Vc, Vr and Vs represent the values of properties C, R, S.

For instance, MSV1 in the DCDTS shown at the bottom of Fig. 3 maps to both entity named "ipv4:10.244.0.4" in the "ipv4" domain and entity named "ane:10.244.0.4". While the suffix "10.244.0.4" has a meaning in the "ipv4" domain (an endpoint identifier), it is interpreted as a string in the "ane" domain.

In this example, entity properties reflecting compute resources such as C, R, S with example values Vc, Vr, Vs, can be defined on "ane:10.244.0.4" but not on "ipv4:10.244.0.4". A DC element may be mapped to an ALTO entity by its IP address. To report in an ALTO property map the resources and state of a MSV in a data center, one may want to define a relation between "ane:10.244.0.4" and "ipv4:10.244.0.4". This is currently not possible with the standardized ALTO services.

According to current ALTO specifications, an entity is to be interpreted relative to an entity domain and has entity domain specific properties. E.g. MSV1 may be interpreted as an IP address with e.g. property "pid" or as an abstracted network element (ane) with some (example) properties, such as C, R, S, A. "ipv4:10.244.0.4" is parsed as an IPv4 address, while "ane:10.244.0.4" and "ane:DC1-HOST1" are parsed as an ID-string. C, R, S, A cannot be defined on an "ipv4" entity (=IPv4 address). PID cannot be defined on an ANE, such as a link group. In the above examples, all entities in the DC topology map (DCDTT) map to both an IP address and an ANE.

In Fig. 4, new property types are introduced in addition to usual properties already specified or published as examples. The new property types are:
- DM, that stands for ALTO entity domain type mappings, that can be defined on all entity domain types. The value is an array of entity domain identifiers (EDI) that can be used as a prefix to retrieve an entity in other entity domains. Associating a prefix listed in DM and the suffix of the entity on which DM is defined, allows to directly form the identifier of the entity in the domains listed in DM, when the entity identifier syntax or future extensions thereof allows it. The DM array associated to an entity may indicate that this entity can be retrieved in property maps conveying all the EDs listed in the DM array.
- property type "network-address" that can be defined on entities of domain type "ane". This property exposes the network address domain, typically an IPv4 or IPV6 address of an ANE, where this ANE may represent a Server, a MSV or a Data Center. The values of this property follow the syntax of the applicable network address domain. It allows easy retrieval of ANEs in an ANE property map upon their IP address as network map Endpoints.

- introduce property type named NAME that can be defined on entities of domain type "ane". NAME conveys the name defined in the DC for elements of planned deployment topology. Elements can be at least MSVs or hosts or groups thereof,
- property type named HSC, that stands for health-score and can be defined on entities of domain type "ane". HSC preferably has numerical values that may be an overall evaluation of the availability of an ANE reflecting for instance how often it crashes or has a resources shortage, and can be used to compare and select MSVs or their hosts. HSC values can also be some index that points to a more detailed description of the incidents occurred on the ANE with possibly some additional qualitative label denoting "instable" or "vulnerable" or "reliable", ...
- property type named A, that stands for availability that can be defined on entities of domain type "ane". A has numerical values that may reflect a more "instant" score regarding the availability of its resources and is more suitable for ANEs such as Servers or sets of one or more links.
- property type named State or operational state, that can be defined on entities of domain type "ane". State may take qualitative values reflecting as "running", "pending" or "crashed".

Other new features such as filtering constraints on ALTO entity addresses and property values may be introduced, to refine the queries. The property names introduced hereinabove are examples and may be subject to change. In Fig. 4, entities relating to MSV 10.244.0.7 are not shown, for the sake of brevity.

Based on the new properties illustrated in Fig. 4, Figs. 5a and 5b illustrate how DC topology elements and their properties and status can be mapped to an ALTO topology and relevant ALTO property maps, using both perspectives of networking and computation elements. A MSV can be represented both as an entity defined by its network address and as an abstracted network element.

For instance, as shown in Fig. 5a, the MDTS exposes the abstraction of the actual deployment. In the example, it uses mainly the properties discussed hereinabove, but this is not restrictive. Upon polling of the orchestrator, on the deployment status, the identifiers, status and properties of the MSVs that are deployed and their hosts are gathered in some temporary DCDTS file (shown at the bottom of Fig. 5a) that is used as an input to the ALTO MDTS. The abstraction of the deployed MSV topology is stored in ALTO network map and property maps that are gathered in MDTS shown at the top of Fig. 5a.

The MDTS contains the abstracted deployment state. It can be noticed that the MSV named "MSV2" is not properly deployed. Therefore, it does not have an IP address. As a consequence, in the MDTS, its identifier in the "ane" entity domain is still "ane:MSV2". It does not have a network address and therefore cannot be mapped to an entity in the "ipv4" domain. The absence of network address can be represented in different ways that comprise at least a value equal to or symbolizing "NULL" or the absence, in the properties of member "network-address". The DCDTS reports that the MSVs named MSV3 and MSV1 have been properly deployed. Therefore, in MDTS, the network address of "ane: 10.244.0.4" and "ane: 10.244.0.7" can be used and mapped with their addresses in the "ipv4" domain.

Fig. 5b shows another example embodiment. Fig. 5b corresponds to Fig. 5a, except that in MDTS, the identifier in the "ane" entity domain of MSV1 is still "ane:MSV1" even if it has been properly deployed. But its network address is "ipv4:10.244.0.4" and can be directly used to check the "pid" property in the "ipv4" entity property map or lookup the network map to see if Endpoint "ipv4:10.244.0.4" is deployed.

In another example embodiment, the indication of MSV2 may be dropped because it was not deployed. In this case, it is preferable to update and store health-related properties on ANEs before dropping them from a MDTS.

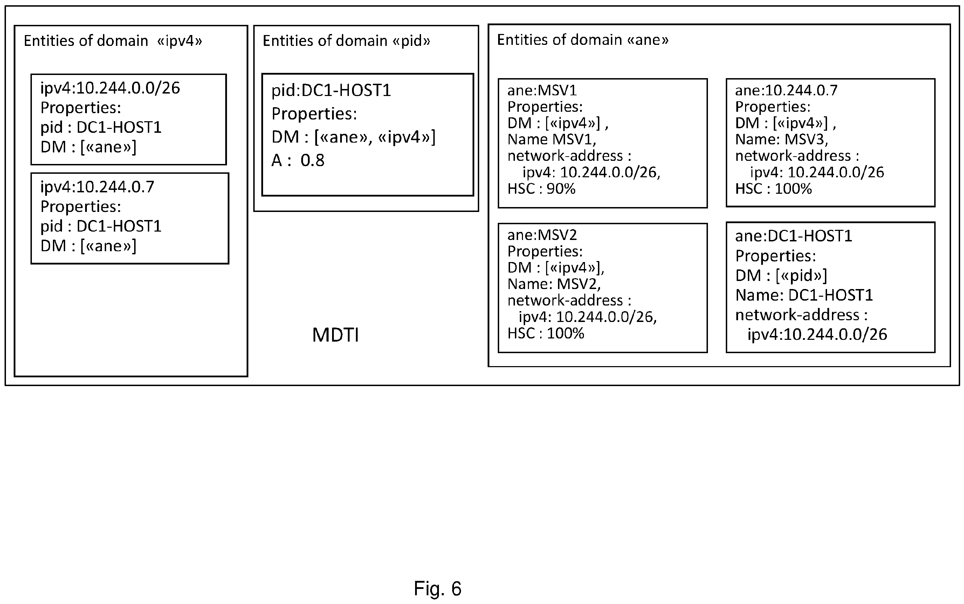

Fig. 6 depicts an example Target MSV deployment topology. This example illustrates an alternative where the MSVs do not systematically get an IP address before they are properly deployed.

The entities of domain "ane" include 3 MSVs to be deployed respectively, named "ane:MSV1", "ane:MSV2" and "ane:10.244.0.7", and 1 Host named "DC1-HOST1". "DC1-HOST1" has a property network-address set to 10.244.0.0/26.

The property "network-address" for the 3 MSVs has a value set to 10.244.0.0/26 as well, which indicates that these 3 MSV are expected to be deployed in host with address 10.244.0.0/26. When mapping the MSV network address with "ipv4" entities, it appears that the "ipv4" entities all have a property named "pid" with value "DC1-HOST1", which identifies the host where these MSVs should be deployed.

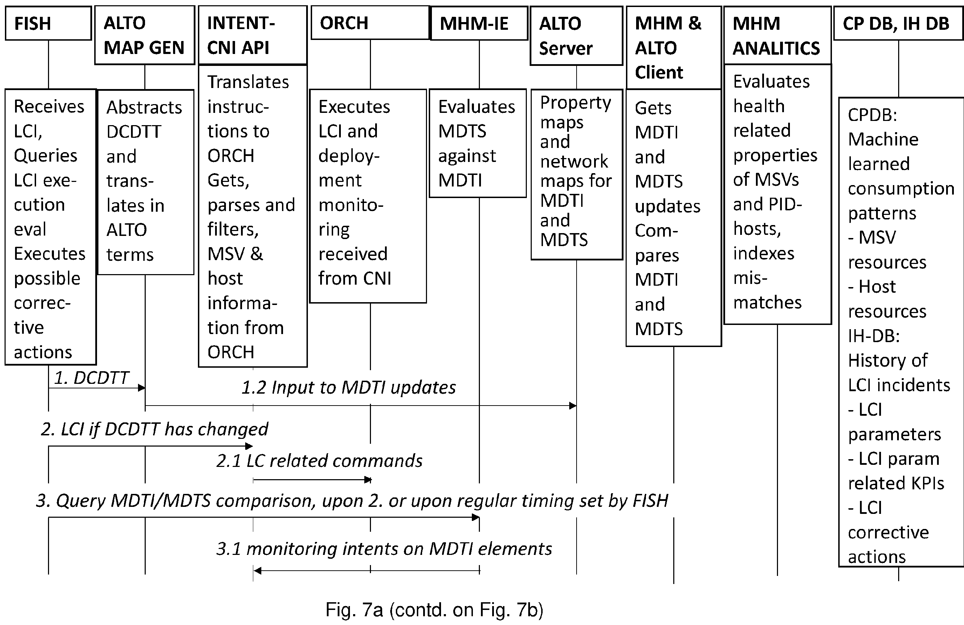

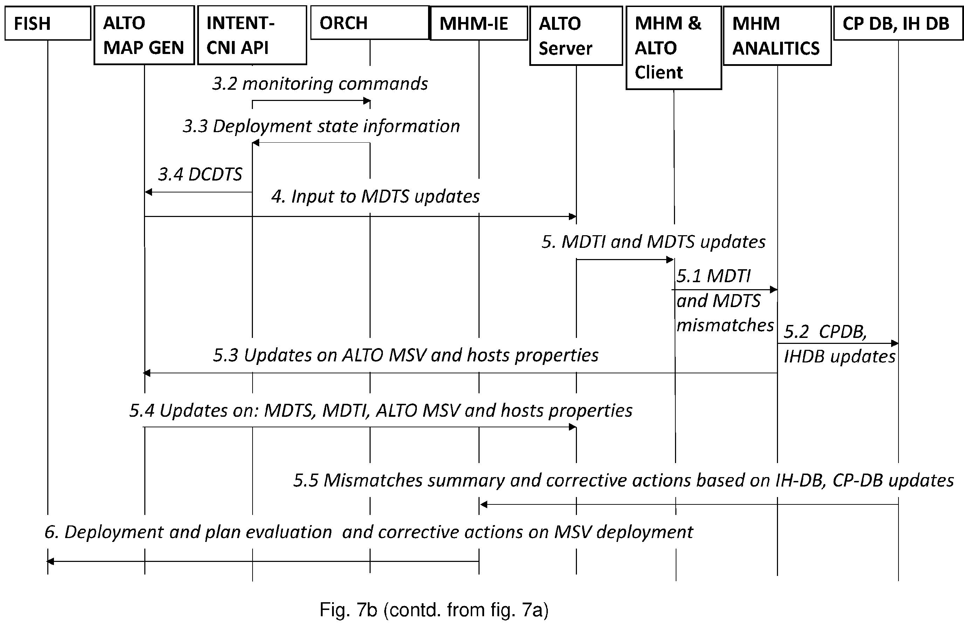

Fig. 7 shows a message sequence chart according to some example embodiments of the invention. In Fig. 7, an apparatus according to some example embodiments of the invention is split into functional components, such as FISH, ALTO map generator etc. In the box below, some relevant actions performed by the respective component are indicated. However, some apparatuses according to example embodiments of the invention may have a different function split than that shown in Fig. 7.

The actions in the message sequence chart of Fig. 7 are as follows:
1. The FISH component sends a DCDTT to the ALTO map generator.
1.2. ALTO map generator abstracts the DCDTT and translates it into ALTO terms. The resukt is sent to ALTO server for MDTI updating.
2. If DCDTT has changed, FISH sends a LCI to Intent-CNI API.
2.1. The Intent-CNI API translates the LCI into a corresponding command suitable for the Orchestrator, which executes the command. Thus, the status of CNI and the ALTO MDTI should have a same status if there aren't any problems.
3. FISH queries MHM-IE to perform a comparison of MDTI and MDTS, upon step 2, or upon regular timing set by FISH.
3.1. Upon receipt of the query, MHM-IE sends monitoring intents to Intent-CNI API.
3.2 + 3.3. Intent-CNI API translates the monitoring intents into appropriate commands for the orchestrator which provides deployment state information (DCDTS) in return.
3.4. Intent-CNI API forwards DCDTS to ALTO map generator.
4. Based on the received DCDTS, ALTO map generator provides input to ALTO server to update MDTS.
5. ALTO server provides (updates) MDTS to MHM & ALTO client. In addition, it provides MDTI (of action 1.2) to MHM& ALTO client.
5.1. MHM&ALTO client compares MDTI and MDTS. If any mismatch is detected, it lists the mismatches and informs MHM analytics thereon. If there isn't any mismatch, it is assumed that the application runs smoothly.
5.2 MHM analytics analyses the mismatches received from MHM&ALTO client (if any) and updates CPDB and/or IHDB accordingly.
5.3+5.4 Furthermore, MHM analytics may update the ALTO properties of MSC and host in ALTO map generator, which in turn, may update MDTS, MDTI and the ALTO properties of MSV and host in ALTO server.
5.5 The MHM-IE gets from the IHDB a synthetic version of the mismatches between MDTS and MDTI, typically together with proposals of corrective actions to be taken if needed. If updates were made in CPDB on MSV and Host resources consumption patterns, the MHM-IE also gets them from CPDB. The MHM-IE summarises the mismatches, and this summary typically comprises (at least) significant differences in available and required resources. These differences may reflect that the deployment plan originating the MDTI should be revised. The MHM-IE computes an evaluation of the MDTI based on these differences.
6. If proposals for corrective actions are present in the information obtained by the MHM-IE from the IHDB, the MHM sends them to FISH. When the MHM-IE gets updates on consumption patterns from the CPDB, it sends them to FISH along with the corrective actions. These patterns may be used to recompute the deployment plans for the application slice instance (ASI), that will originate an updated MDTI.

To summarize, some example embodiments of the invention may provide one or more extensions over current ALTO standards. The extension may be included in an ALTO Entity Property Map (EPM). These extensions comprise one or more of the following (the names are given as examples and are not limiting the invention):
- a property applicable to all Entity Domain Types (EDT), that reflects whether entities can be defined on different entity domains, and called for example "domain mapping". This property is an array of EDT identifiers.
   ∘ Using this property on ipv4 or ipv6 entities or any entity that has a network address that denotes that the entity identifier maps to an ANE or an entity of another domain type. This helps to retrieve the corresponding entities from e.g. ANE property maps.
- a property type for entites of domain "ane" named for instance "network-address". This property exposes the network address, typically an IPv4 address of an ANE representing a Server, a MSV or a Data Center. It allows easy retrieval of ANEs in the ANE property map upon their IP address as network map Endpoints.
- a filtering constraint on ANE property expressed for instance as "network address eq. ADDR" where ADDR denotes the network address of an Endpoint. This allows to retrieve the ANEs that have an address corresponding to a MSV or a host/server and retrieve its properties reflecting their compute resources.
- Property type named NAME that can be defined on entities of domain type "ane". NAME conveys the name defined in the DC for elements of planned deployment topology. Elements can be at least MSVs or hosts or groups thereof,
- Properties on ANE reflecting their reliability for example a generic "healthscore", "availability" taking values such as "instable" or "vulnerable", reflecting whether an MSVs often crash or are attacked, or for example a property "operational-state" taking values such as "running", "pending", "crashed". Properties such as "healthscore", "availability", are not defined in orchestrators, and can be inferred at a higher level from machine analysis,
- Constraints on properties either with Boolean values, or equality relation or numerical order relations.

Some example embodiments of the invention may provide one or more of the following advantages:
- The monitoring of the MSVs may be automated with the MSV Self healing intents that are triggered to generate appropriate instructions to orchestrators, depending on the lifecycle action to perform on the slice or MSV. It makes their monitoring and healing scalable and may rely on orchestration implementation agnostic rules.
- A simplified though exhaustive representation of MSV deployment topology, making it easier to monitor and repair failures on MSV,
- The ALTO-MSV deployment topology is compact and scalable, the data is filtered w.r.t. the needed information, can be arbitrarily "zoomed" on given zones of the data center topology,
- Comparing intended (MDTI) and actual (MDTS) deployment topologies is simple and fast, as it basically comprises just comparing JSON input.
- In addition to hiding complexity, some example embodiments significantly reduce it. It is for example less "intrusive" than some prior art solutions (WO 2020/152503 A1) that assign and update availability labels to PODs. Instead, some example embodiments keep a POD/endpoint map above the orchestrator level, and can assign and manage labels such as availability as entity properties, without reaching out to the orchestrator and "touching" the POD description and labels.
- FISH communicates with the orchestrator using a standard protocol (HTTP), and thus can work with different implementations, such as Kubernetes (K8S, K3S) as well as for Docker Swarm, only needing an implementation-specific HTTP body generation function.
- When the utilized orchestrator implementation changes, instead of having to change an orchestrator-specific deployment map, just need to change the HTTP requests to the orchestrator,
- Exposing a standardized topology allows interoperability and addresses needs strongly expressed at [naw].
- Some example embodiments are located above the orchestrator level, they use a standard communication protocol and topology abstraction, where the latter can be zoomed at arbitrary locations. Therefore, they can interact with several orchestrators.
- While ALTO initially focused on network abstraction, the topic of Compute Aware Networking is strongly pushed in the current charter by operators. Some example embodiments address the topic with features that integrate compute capabilities to ALTO network abstraction,

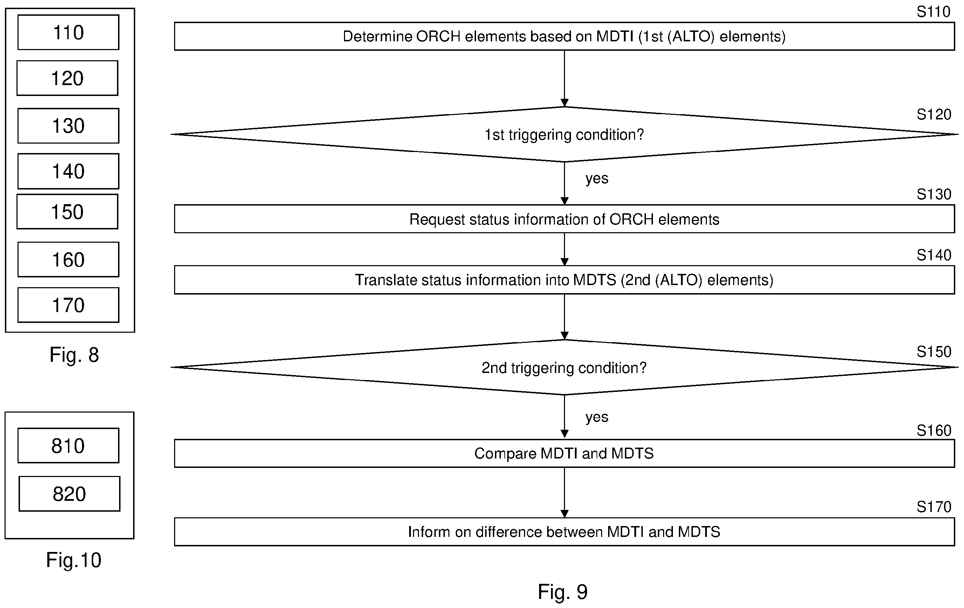

Fig. 8 shows an apparatus according to an example embodiment of the invention. Fig. 9 shows a method according to an example embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises means for determining 110, means for checking 120, means for requesting 130, means for translating 140, means for supervising 150, means for comparing 160, and means for informing 170. The means for determining 110, means for checking 120, means for requesting 130, means for translating 140, means for supervising 150, means for comparing 160, and means for informing 170 may be a determining means, checking means, requesting means, translating means, supervising means, comparing means, and informing means, respectively. The means for determining 110, means for checking 120, means for requesting 130, means for translating 140, means for supervising 150, means for comparing 160, and means for informing 170 may be a determiner, checker, requestor, translator, supervisor, comparer, and informer, respectively. The means for determining 110, means for checking 120, means for requesting 130, means for translating 140, means for supervising 150, means for comparing 160, and means for informing 170 may be a determining processor, checking processor, requesting processor, translating processor, supervising processor, comparing processor, and informing processor, respectively.

The means for determining 110 determines elements of a representation of a northbound interface of an orchestrator based on translator information and a deployment topology intent (S110). The deployment topology intent (e.g. MDTI) comprises at least one first element (e.g. ALTO elements) and values of respective one or more properties of the at least one first element. Each of the at least one first element is a respective network map or a respective provider-defined identifier or a respective endpoint or a respective IPv4 entity or a respective IPv6 entity or a respective abstracted network element. According to the translator information, the at least one first network element is implemented by the elements of the representation of the northbound interface of the orchestrator. The representation of the northbound interface of the orchestrator does not comprise any of the first elements.

The means for checking 120 checks whether a first triggering condition is fulfilled (S120). The first triggering condition comprises at least one of: the deployment topology intent receives a lifecycle request, and a first regular timing has elapsed.

S110 and S120 may be performed in an arbitrary sequence. They may be performed fully of partly in parallel.

If the first triggering condition is fulfilled (S120 = yes), the means for requesting 130 requests, via the northbound interface of the orchestrator, status information of the elements (S130), i.e. the elements of the representation of the northbound interface of the orchestrator. The means for translating 140 translates the status information received in response to the requesting from the orchestrator into a deployment topology status, based on the translator information (S140). The deployment topology status (e.g. MDTS) comprises presence indication of at least one second element (e.g. ALTO elements) and values of respective one or more properties of the at least one second network element. Each of the at least one second element is a respective network map or a respective provider-defined identifier or a respective endpoint or a respective IPv4 entity or a respective IPv6 entity or a respective abstracted network element. The representation of the northbound interface of the orchestrator does not comprise any of the second abstracted network elements.

The means for supervising 150 supervises whether a second triggering condition is fulfilled (S150). The second triggering condition comprises at least one of: the deployment topology intent receives the lifecycle request, and a second regular timing has elapsed. The second regular timing may be the same as the first regular timing or different therefrom (i.e., the respective time periods may be the same or different).

S140 and S150 may be performed in an arbitrary sequence. They may be performed fully of partly in parallel.

If the second triggering condition is fulfilled (S150 = yes), the means for comparing 160 compares the deployment topology intent with the deployment topology status (S160). The means for informing 170 informs on a difference between the deployment topology intent and the deployment topology status based on a result of the comparing (S170). For example, the means for informing may raise an alarm if a difference is present.

Fig. 10 shows an apparatus according to an example embodiment of the invention. The apparatus comprises at least one processor 810, at least one memory 820 including computer program code, and the at least one processor 810, with the at least one memory 820 and the computer program code, being arranged to cause the apparatus to at least perform at least the method according to at Fig. 9 and related description.

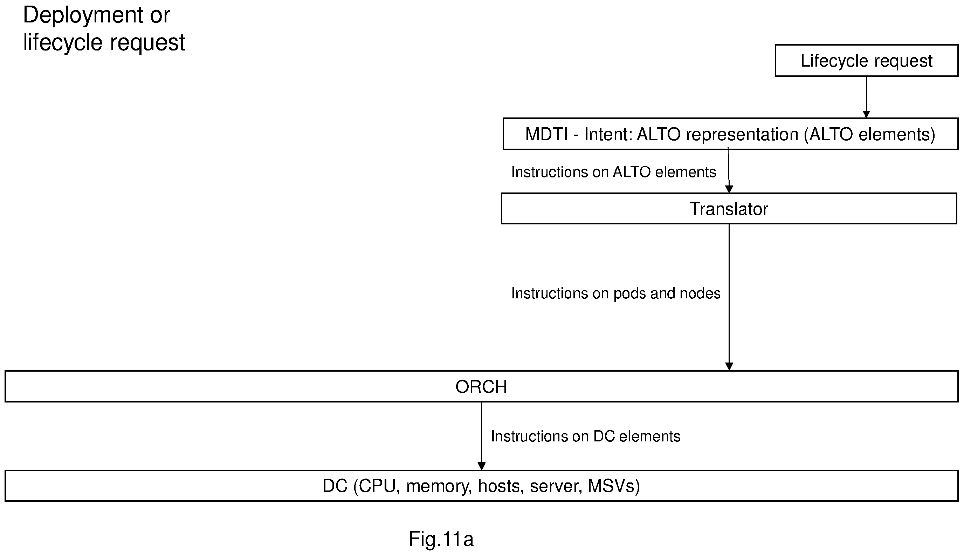

Figs. 11a to 11c illustrate a method according to some example embodiments of the invention. The actions follow a sequence from Fig. 11a to Fig. 11b to Fig. 11c. Dashed lines indicate elements or actions used in previous stages of the method, while solid lines indicate the elements or actions of the actual stage.

As shown in Fig. 11a, there is a life cycle request (e.g. deployment or update). This request is an intent, stored in MDTI (or MDTI is updated accordingly). In MDTI, the Intent is represented in an abstract way, e.g. according to ALTO standards. For example, it is represented as one or more network maps, one or more PIDs, one or more endpoints, one or more IPv4 or IPv6 entities, or one or more ane entities.

The Intent is translated such that ORCH can understand it at its northbound interface, and ORCH acts on one or more DCs. For the translation, some translation information is used. For example, in Kubernetes, the elements are represented at the northbound interface of the ORCH as data center, cluster, pod, or node.

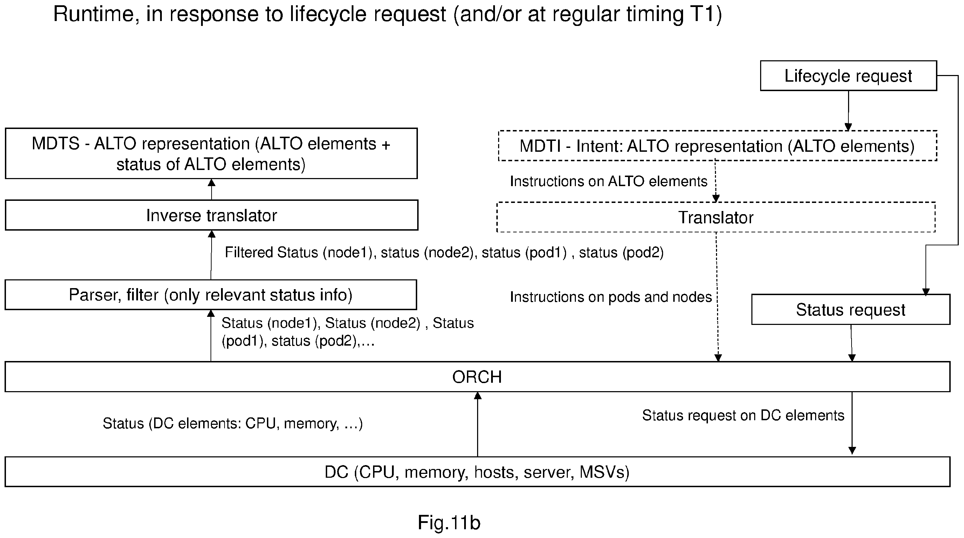

As shown in Fig. 11b, due to the lifecycle request or at a regular timing T1, a status request is sent to ORCH. ORCH retrieves the status of DC elements from the DC(s) and may provide it to a parser and filter. The status is given for elements (e.g. pods and/or nodes) represented at the northbound interface of the ORCH. The filter filters out at least some information from the response provided by ORCH which is irrelevant for obtaining MDTS. Filtering is typically needed in actual deployments of Kubernetes etc., but not from a generic point of view because the status request might retrieve only the relevant information and nothing else. I.e., filtering is not essential.

The (filtered) status information is sent to an "inverse translator", which translates the status information of ORCH elements (nodes and/or pods) into status information of elements of the abstract representation (e.g. ALTO elements), resulting in MDTS. The "inverse translator" uses the same translation information as used to translate the lifecycle request into commands to the orchestrator (but inversely).

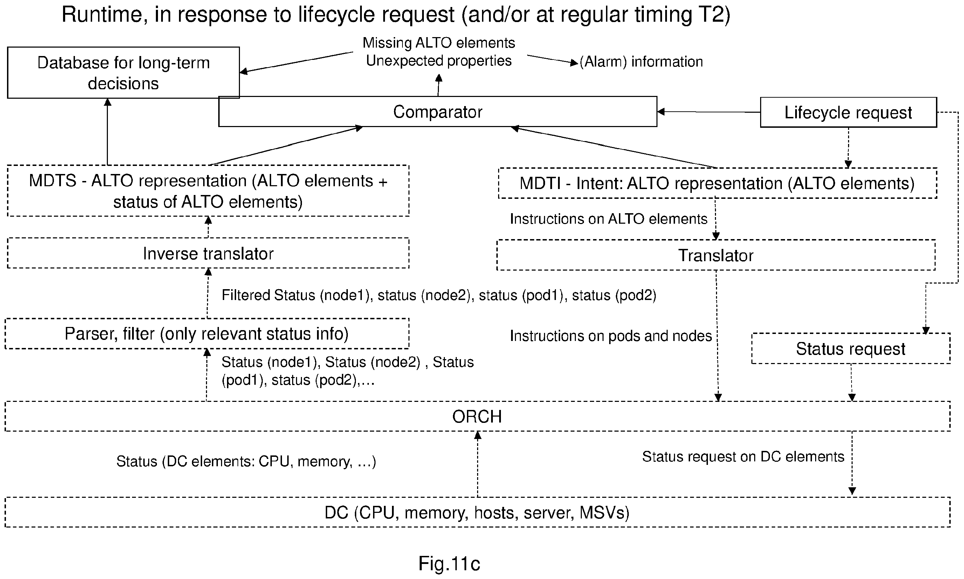

As shown in Fig. 11c, due to the lifecycle request or at a regular timing T2 (may be different from T1 or the same), the comparator compares MDTI and MDTS. If it detects that some elements of the abstract network representation of MDTI are not present in MDTS, it understands that these elements of the abstract network representation are faulty and informs accordingly, e.g. by an alarm. Correspondingly, if some of the elements of the abstract network representation are present in MDTS but have unexpected properties or some property is missing (may be considered as an unexpected property, too), the comparator understands that these elements of the abstract network representation are faulty and informs accordingly, e.g. by an alarm. This information and potentially also the MDTS may additionally be stored in a database for long-term decisions.

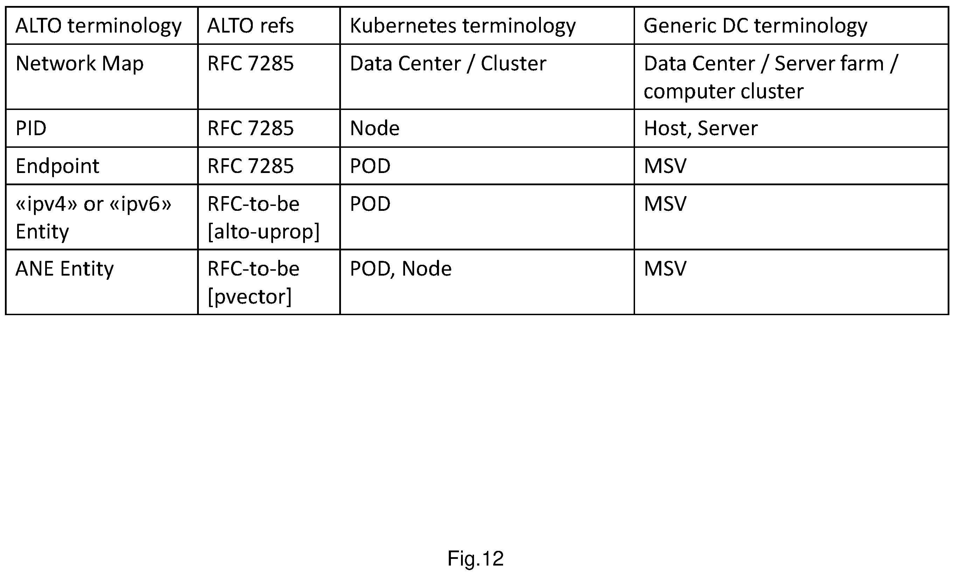

According to some example embodiments of the invention, there is a translation between the entities of an abstract network representation (such as ALTO) and those used by an ORCH (such as Kubernetes). The ORCH itself translates between its own elements and the generic entities of the datacenter (such as CPU, memory). Fig. 12 provides a list of some of the entities defined in the respective domains. Note that each domain is agnostic of the corresponding entities in the other domains. The table of Fig. 12 may be considered as a translation information (or as part of translation information) which the translator and inverse translator may use to translate information in ALTO representation to information that may be used at the northbound interface of ORCH and vice versa. In addition, some corresponding terms in DC terminology are indicated.

Some example embodiments are explained with respect to a 5G network. However, the invention is not limited to 5G. It may be used in networks (such as communication networks), too, e.g. in previous of forthcoming generations of 3GPP networks such as 4G, 6G, or 7G, etc. It may be used in non-3GPP communication networks and in computing networks not related to any communication networks, too.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a monitoring component (such as a MHM component) or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

The phrase "at least one of A and B" comprises the options only A, only B, and both A and B. The terms "first X" and "second X" include the options that "first X" is the same as "second X" and that "first X" is different from "second X", unless otherwise specified.

## Claims

1. Apparatus comprising:
one or more processors, and
memory storing instructions that, when executed by the one or more processors, cause the apparatus to perform:
determining elements of a representation of a northbound interface of an orchestrator based on translator information and a deployment topology intent;
checking whether a first triggering condition is fulfilled;
requesting, via the northbound interface of the orchestrator, status information of the elements if the first triggering condition is fulfilled;
translating the status information received in response to the requesting from the orchestrator into a deployment topology status based on the translator information;
supervising whether a second triggering condition is fulfilled;
comparing the deployment topology intent with the deployment topology status if the second triggering condition is fulfilled;
informing on a difference between the deployment topology intent and the deployment topology status based on a result of the comparing; wherein
the first triggering condition comprises at least one of:
the deployment topology intent receives a lifecycle request, and
a first regular timing has elapsed;
the second triggering condition comprises at least one of:
the deployment topology intent receives the lifecycle request, and
a second regular timing has elapsed;
the deployment topology intent comprises at least one first element and values of respective one or more properties of the at least one first element;
the deployment topology status comprises presence indication of at least one second element and values of the respective one or more properties of the at least one second element;
each of the at least one first element and the at least one second element is a respective network map or a respective provider-defined identifier or a respective endpoint or a respective IPv4 entity or a respective IPv6 entity or a respective abstracted network element;
according to the translator information, the one or more first and second elements are implemented by the elements of the representation of the northbound interface of the orchestrator;
the representation of the northbound interface of the orchestrator does not comprise any of the first and second elements.

2. The apparatus according to claim 1, wherein each of the one or more first abstracted network elements and the one or more second abstracted network elements represents a respective host and respective one or more microservices deployed on the respective host in the representation of the northbound interface of the orchestrator; and the instructions, when executed by the one or more processors, cause the apparatus to perform
deciding that one of the one or more microservices is not running if the deployment topology status does not comprise a presence indication of the one of the one or more microservices or does not comprise a communication address of the one of the one or more microservices or comprises an indication of dysfunction; wherein
the informing comprises informing that the one of the one or more microservices is not running if it is decided that the one of the one or more microservices is not running.

3. The apparatus according to claim 2, wherein the instructions, when executed by the one or more processors, cause the apparatus to perform
deciding that the one of the one or more microservices is running if the deployment topology status comprises the presence indication of the microservice and the communication address of the microservice.

4. The apparatus according to any of claims 2 to 3, wherein the instructions, when executed by the one or more processors, further cause the apparatus to perform
determining whether or not one of the one or more first abstracted network elements of the deployment topology intent is running properly based on whether or not the one or more microservices represented by the one of the one or more first abstracted network elements are running; wherein
the informing comprises informing that the one of the one or more first abstracted network elements is not running properly if at least one of the one or more microservices of the one of the one or more first abstracted network elements is not running..

5. The apparatus according to any of claims 2 to 4, wherein the instructions, when executed by the one or more processors, further cause the apparatus to perform
triggering a self-healing procedure on the one of the one or more microservices if it is decided that the one of the one or more microservices is not running.

6. The apparatus according to any of claims 1 to 5, wherein
in the deployment topology status, each of the represented microservices is defined by a respective endpoint address, where the endpoint address is a communication address of an endpoint; and
in the deployment topology intent, the microservice is represented by the endpoint address as a property, and the microservice is not defined by the endpoint address; and the instructions, when executed by the one or more processors, further cause the apparatus to perform
mapping, prior to the comparing, each of the microservices represented by the deployment topology status to a respective microservice represented by the deployment topology intent based on the property and the endpoint address.

7. The apparatus according to any of claims 1 to 6, wherein the instructions, when executed by the one or more processors, further cause the apparatus to perform
parsing and filtering the status information from the orchestrator prior to the translating into the deployment topology status.

8. Method comprising:
determining elements of a representation of a northbound interface of an orchestrator based on translator information and a deployment topology intent;
checking whether a first triggering condition is fulfilled;
requesting, via the northbound interface of the orchestrator, status information of the elements if the first triggering condition is fulfilled;
translating the status information received in response to the requesting from the orchestrator into a deployment topology status based on the translator information;
supervising whether a second triggering condition is fulfilled;
comparing the deployment topology intent with the deployment topology status if the second triggering condition is fulfilled;
informing on a difference between the deployment topology intent and the deployment topology status based on a result of the comparing; wherein
the first triggering condition comprises at least one of:
the deployment topology intent receives a lifecycle request, and
a first regular timing has elapsed;
the second triggering condition comprises at least one of:
the deployment topology intent receives the lifecycle request, and
a second regular timing has elapsed;
the deployment topology intent comprises at least one first element and values of respective one or more properties of the at least one first element;
the deployment topology status comprises presence indication of at least one second element and values of the respective one or more properties of the at least one second element;
each of the at least one first element and the at least one second element is a respective network map or a respective provider-defined identifier or a respective endpoint or a respective IPv4 entity or a respective IPv6 entity or a respective abstracted network element;
according to the translator information, the one or more first and second elements are implemented by the elements of the representation of the northbound interface of the orchestrator;
the representation of the northbound interface of the orchestrator does not comprise any of the first and second elements.

9. The method according to claim 8, wherein each of the one or more first abstracted network elements and the one or more second abstracted network elements represents a respective host and respective one or more microservices deployed on the respective host in the representation of the northbound interface of the orchestrator; and the method further comprises
deciding that one of the one or more microservices is not running if the deployment topology status does not comprise a presence indication of the one of the one or more microservices or does not comprise a communication address of the one of the one or more microservices or comprises an indication of dysfunction; wherein
the informing comprises informing that the one of the one or more microservices is not running if it is decided that the one of the one or more microservices is not running.

10. The method according to claim 9, further comprising
deciding that the one of the one or more microservices is running if the deployment topology status comprises the presence indication of the microservice and the communication address of the microservice.

11. The method according to any of claims 9 to 10, further comprising
determining whether or not one of the one or more first abstracted network elements of the deployment topology intent is running properly based on whether or not the one or more microservices represented by the one of the one or more first abstracted network elements are running; wherein
the informing comprises informing that the one of the one or more first abstracted network elements is not running properly if at least one of the one or more microservices of the one of the one or more first abstracted network elements is not running..

12. The method according to any of claims 9 to 11, further comprising
triggering a self-healing procedure on the one of the one or more microservices if it is decided that the one of the one or more microservices is not running.

13. The method according to any of claims 8 to 12, wherein
in the deployment topology status, each of the represented microservices is defined by a respective endpoint address, where the endpoint address is a communication address of an endpoint; and
in the deployment topology intent, the microservice is represented by the endpoint address as a property, and the microservice is not defined by the endpoint address; and the method further comprises
mapping, prior to the comparing, each of the microservices represented by the deployment topology status to a respective microservice represented by the deployment topology intent based on the property and the endpoint address.

14. The method according to any of claims 8 to 13, further comprising
parsing and filtering the status information from the orchestrator prior to the translating into the deployment topology status.

15. A computer program product comprising a set of instructions which, when executed on an apparatus, is configured to cause the apparatus to carry out the method according to any of claims 8 to 14.
